# EUROPÄISCHE PATENTSCHRIFT

(11) **EP 1 084 465 B1**
(45) Veröffentlichungstag und Bekanntmachung des Hinweises auf die Patenterteilung: **28.12.2005**
(21) Anmeldenummer: 99929131.3
(22) Anmeldetag: 02.06.1999
(51) Int. Cl.: G06F 1/00, H04L 29/06

(54) **VERFAHREN ZUM ABGESICHERTEN ZUGRIFF AUF DATEN IN EINEM NETZWERK**
METHOD FOR SECURED ACCESS TO DATA IN A NETWORK
PROCEDE D'ACCES SECURISE A DES DONNEES DANS UN RESEAU

(30) Priorität: 03.06.1998 DE 19824787
(43) Veröffentlichungstag der Anmeldung: 21.03.2001
(73) Patentinhaber: Péré, Paul, 80636 München (DE)
(72) Erfinder: Péré, Paul, 80636 München (DE)
(74) Vertreter: Müller, Frithjof E.
(86) Internationale Anmeldenummer: PCT/EP1999/003839
(87) Internationale Veröffentlichungsnummer: WO 1999/063420

(56) Entgegenhaltungen:
- EP-A- 0 398 492
- WO-A-98/15910
- US-A- 5 699 526
- DE CPITANI DI VIMERCATI S ET AL: "ACCESS CONTROL IN FEDERATED SYSTEMS" NEW SECURITY PARADIGMS WORKSHOP, LAKE ARROWHEAD, SEPT. 17 - 20, 1996, 17. September 1996 (1996-09-17), Seiten 87-99, XP000751315 ASSOCIATION FOR COMPUTING MACHINERY ISBN: 0-89791-944-0

## Beschreibung

Die Erfindung betriff ein Verfahren zum abgesicherten Zugriff auf Daten in einem Netzwerk, im Speziellen in einem Netzwerk mit einem Informationscenter und wenigstens einem Datenraum-Zugriffssystem, wobei unter dem Begriff Datenraum-Zugriffssystem eine Einrichtung verstanden wird, die Speicherplatz (Datenraum) zur Verfügung stellt und den Zugriff auf gespeicherte Daten ermöglicht.

In der nahen Zukunft sollen für unterschiedliche Interessengruppen eines öffentlichen oder privaten Sektors beispielsweise im Gesundheitswesen, etwa für die Krankenkassen, das Gesundheitsministerium und medizinische Zusammenschlüsse, die sogenannten "Praxisnetze" entwickelt werden. Der Grundgedanke dieser Praxisnetze ist es, daß aufgrund einer besseren Kommunikation zwischen unterschiedlichen Arztpraxen und/oder Krankenhäusern zur Zeit häufig noch redundant ausgeführte medizinische Untersuchungen reduziert werden können. In diesem Sinne wäre es z. B. nicht nötig, ein weiteres Röntgenbild einer Lunge eines Patienten zu erstellen, wenn eine erneute Diagnose z. B. eines anderen Arztes unter Zuhilfenahme eines leicht zugänglichen kürzlich aufgenommenen Röntgenbildes der Lunge dieses Patienten möglich wäre. Es liegt im öffentlichen Interesse und dem der Versicherungsgesellschaften, die Gesundheitskosten zu reduzieren, weswegen insbesondere letztere autonome medizinische Netzwerke aufbauen möchten, mit deren Hilfe unterschiedliche Ärzte eines Patienten zu seiner besseren und kostengünstigeren medizinischen Versorgung auch auf die bereits von ihren Kollegen erstellten Daten dieses Patienten zugreifen können.

Bei heute schon aufgebauten Versuchsmodellen besteht das Hauptproblem darin, eine sichere Kommunikation zu gewährleisten. Es sind unterschiedliche Lösungen der Verbindung eines Arztes zu medizinischen Einheiten bekannt, die hauptsächlich auf eine bestimmte Gruppe von Ärzten begrenzt sind, z. B. die Radiologen, wobei naturgemäß eine Beschränkung auf eine spezielle Art der Information/Daten vorgegeben ist, z. B. Röntgenaufnahmen.

Es existieren schon einige nationale und internationale Standards, die die Art der Erzeugung und Übertragung von medizinischen Daten definieren. z. B. DICOM für Röntgenaufnahmen. BDT für die Daten eines Patienten. GDT für medizinische Daten, die von medizinischen Geräten erzeugt wurden, z. B. von einem Elektrokardiographen oder anderen Einrichtungen. Hierbei werden hinsichtlich der abgesicherten Übertragung von medizinischen Daten keine speziellen Anforderungen gestellt, da dies aufgrund unterschiedlicher bekannter Verschlüsselungsmechanismen heute kein Problem mehr ist.

Eine besondere Aufgabe bei der Übertragung von medizinischen Daten ist es, die individuellen Persönlichkeitsrechte des Patienten zu gewährleisten. Die heute praktizierte Übertragung von medizinischen Informationen ist immer dann illegal, wenn sie nicht auf eine abgeschlossene medizinische Gruppe wie z. B. ein Krankenhaus oder eine Arztpraxis begrenzt ist. Ein Praxisnetz mit hunderten verschiedener Praxen und Krankenhäusern als abgeschlossene Gruppe zu bezeichnen wäre im rechtlichen Sinne wohl als eine Umgehung der Persönlichkeitsrechte von Patienten zu interpretieren. In diesem Fall hätte ein Patient keine Möglichkeit, alle Gruppenmitglieder zu kennen, und könnte von seinem Recht der Auswahl einer anderen Gruppe, wie z. B. eines anderen Krankenhauses, kaum Gebrauch machen.

Aus W098/ 15910 A ist ein Verfahren zum sicheren und vertraulichen Austausch medizinischer Daten in einem System mit zahlreichen Teilnehmern bekannt. In diesem System ist ein Zugriff auf Daten eines Teilnehmers nur insoweit möglich, als dieser Zugriff durch ein Paßwort legitimiert ist.

Es ist Aufgabe der vorliegenden Erfindung, ein Verfahren zum abgesicherten Zugriff auf Daten in einem Netzwerk anzugeben, bei dem nur der Inhaber der Rechte an den Daten frei über diese verfügen kann.

Diese Aufgabe wird erfindungsgemäß durch ein Verfahren mit den Merkmalen des Patentanspruches 1 gelöst. Vorteilhafte Weiterbildungen dieses Verfahrens finden sich in den abhängigen Patentansprüchen 2 bis 24.

Nach dem erfindungsgemäßen Verfahren kann allein der Inhaber der Rechte an bestimmten Daten Zugriffsrechte auf diese definieren. Die einmal gespeicherten Daten verbleiben an ihrem Speicherplatz und werden nicht zentralisiert gesammelt. Ein Zugriff auf solche abgespeicherten Daten ist nur mit der Autorisierung des Inhabers der Rechte an diesen Daten möglich. Für medizinische Daten bedeutet dies z. B., daß sie an dem Ort ihrer Erstellung verbleiben und daß andere Ärzte nur mit der Erlaubnis des jeweiligen Patienten auf diese Daten zugreifen können. Eine solche Erlaubnis kann allgemein für bestimmte Ärzte oder auch nur für den Einzelfall erteilt werden.

Auch ist es möglich, eine einmal erteilte Erlaubnis wieder zu entziehen.

Die Erfindung und vorteilhafte Weiterbildungen werden nachfolgend anhand eines Beispiels unter Bezugnahme auf die Zeichnungen näher erläutert. Es zeigen:
- **Figur 1**: einen beispielhaften Aufbau eines Netzwerks, in dem das erfindungsgemäße Verfahren Anwendung finden kann:
- **Figur 2**: die Erzeugung und Abspeicherung von Daten nach dem erfindungsgemäßen Verfahren:
- **Figur 3**: ein Beispiel einer erfolglosen Anfrage nach bestimmten Daten;
- **Figur 4**: den Abruf und die Erteilung von Zugriffsrechten an bestimmten Daten durch den Inhaber der Rechte an diesen Daten;
- **Figur 5**: ein Beispiel einer erfolgreichen Anfrage nach Daten und ihrer Übertragung an die anfragende Stelle.

Im folgenden wird das erfindungsgemäße Verfahren am Beispiel eines Praxisnetzes erläutert. Hier dient das System zur Versorgung einer Gruppe von Ärzten mit den medizinischen Unterlagen ihrer Patienten.

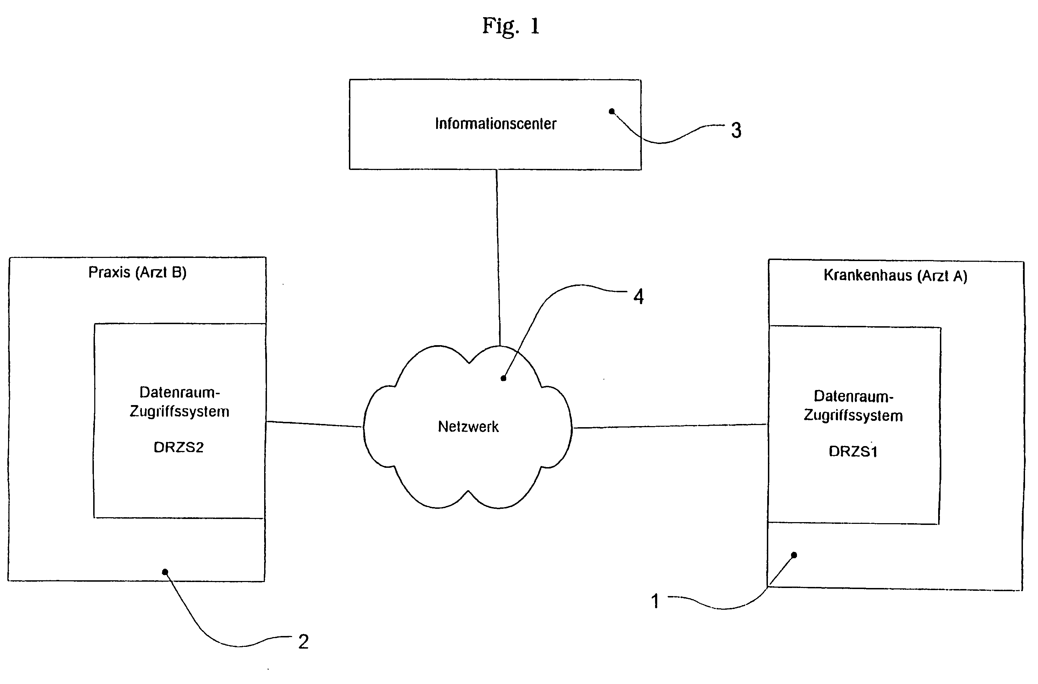

Auf das System können mehrere Ärzte zugreifen, die jeweils einen Zugang auf ein Datenraum-Zugriffssystem haben müssen. Neben diesen Datenraüm-Zugriffssystemen weist das System einen Informationscenter auf. In der Figur 1 ist dieses System zur Vereinfachung mit lediglich zwei Datenraum-Zugriffssystemen 1, 2 gezeigt, von denen eins eine Kennung DRZS1 und das andere eine Kennung DRZS2 aufweist. Solch ein Datenraum-Zugriffssystem 1, 2 kann am Arbeitsplatz eines oder mehrerer Ärzte aufgebaut sein, z. B. ist in der Figur 1 gezeigt, daß das Datenraum-Zugriffssystem 2 in einer Praxis eines Arztes B und das Datenraum-Zugriffssystem 1 einem Krankenhaus aufgebaut sind, in dem ein Arzt A eine Zugriffsberechtigung dafür besitzt. Jedes Datenraum-Zugriffssystem 1, 2 kann über ein Netzwerk 4 mit dem Informationscenter 3 oder einem anderen Datenraum-Zugriffssystem 1, 2 kommunizieren.

Jedes Datenraum-Zugriffssystem 1, 2 enthält einen sicheren Datenspeicher, in dem die medizinischen Daten von Patienten gespeichert werden können. Dieser Speicher ist dadurch zugriffgesichert, daß ein Datenzugriff nur über das erfindungsgemäße Verfahren erfolgen kann, wodurch ein Datenmißbrauch mit in diesem Speicher gespeicherten Daten nicht möglich ist. Weiter ist durch das erfindungsgemäße Verfahren gewährleistet, daß nur neue Daten gespeichert werden können, also nicht solche, die bereits in einem anderen Datenraum-Zugriffssystem 1, 2 gespeichert waren. Weiter können sowohl der jeweilige Arzt als auch der Patient unabhängig voneinander über das Datenraum-Zugriffssystem 1. 2 mit dem Informationscenter 3 oder einem anderen an das Netzwerk 4 angeschlossenen Datenraum-Zugriffssystem 1, 2 kommunizieren, wobei nur ein Arzt Daten speichern kann.

In dem Informationscenter 3 werden Referenzen zu den Daten der Patienten und die dazugehörige Identifizierungsinformation der Patienten und Ärzte zentralisiert gespeichert.

Die Sicherheit der einzelnen Datenübertragungen innerhalb dieses Systems wird über eine Verschlüsselung der Datenübertragungen zwischen allen Teilnehmern gewährleistet. Hierbei wird jede innerhalb des Systems übertragene Information mit einer digitalen Signatur versehen. Bei jedem Zugang wird eine Autorisierung verlangt, und alle Daten werden in verschlüsselter Form übertragen und gespeichert. Jeder Teilnehmer, z. B. ein Arzt oder ein Patient, sowie das Informationscenter und jedes Datenraum-Zugriffssystem verfügen über zwei Paare von öffentlichen und geheimen Schlüsseln zur Datenkodierung. Ein Paar dieser Schlüssel, genannt die Verschlüsselungsschlüssel, wird für die sichere Datenübertragung verwendet und das andere, nämlich die Signaturschlüssel, versieht die übertragene Information und bestätigt dadurch den Absender mit einer digitalen Signatur. Die geheimen Schlüssel sind nur dem jeweiligen Teilnehmer, Informationscenter oder Datenraum-Zugriffssystem bekannt, wohingegen die öffentlichen Schlüssel allen Teilnehmern zugänglich sind, d. h., daß jeder in dem System vorhandene Teilnehmer die Möglichkeit hat, einen öffentlichen Schlüssel jedes anderen Teilnehmers zu bekommen. Immer, wenn ein Teilnehmer eine Information über das Netzwerk versendet, wird das folgende Verfahren ausgeführt:
**1.** Der Sender versieht die von ihm gesendete Information mit einer digitalen Signatur, indem er seinen geheimen Signaturschlüssel verwendet. Hierdurch kann der Sender nicht nachgeahmt werden, wobei der Empfänger eine verwendete digitale Signatur mit Hilfe des öffentlichen Signaturschlüssels bestätigen kann. Wenn z. B. ein Datenraum-Zugriffssystem die Information über einen Patienten an das Informationscenter versendet, muß diese Information bei der Erzeugung von Daten ebenfalls mit dem geheimen Signaturschlüssel dieses Patienten versehen sein. Hierdurch wird gesichert, daß die Information wirklich zu dem benannten Patienten gehört, und daß dieser der Übertragung dieser Information zustimmt.
**2.** Der Sender verschlüsselt alle übertragenen Daten mittels eines öffentlichen Verschlüsselungsschlüssels des Empfängers, an den die Daten übertragen werden. Hierdurch können diese übertragenen Daten nur unter Verwendung des geheimen Verschlüsselungsschlüssels des Empfängers entschlüsselt werden.
**3.** Immer, wenn ein Teilnehmer auf das System zugreift, muß er autorisiert sein und seine Identität bestätigt haben. Ein spezieller Datenträger, wie z. B. eine Chipkarte, kann zur Überprüfung der Identität des Teilnehmers dienen. Natürlich können auch andere Verfahren zur Personenidentifizierung eingesetzt werden, wie z. B. die Spracherkennung, die Bilderkennung, die Erkennung von Fingerabdrücken etc.. von denen jedes einzeln oder in Kombination eingesetzt werden kann.

Als sicherer Speicher für die geheimen Schlüssel eines Teilnehmers und andere persönliche Information kann ebenfalls ein spezieller Datenträger, wie z. B. eine Chipkarte, eingesetzt werden.

Die öffentlichen Schlüssel der Teilnehmer, des Informationscenter 3 und der einzelnen Datenraum-Zugriffssysteme 1, 2 können z. B. zentral in dem Informationscenter 3 gespeichert sein.

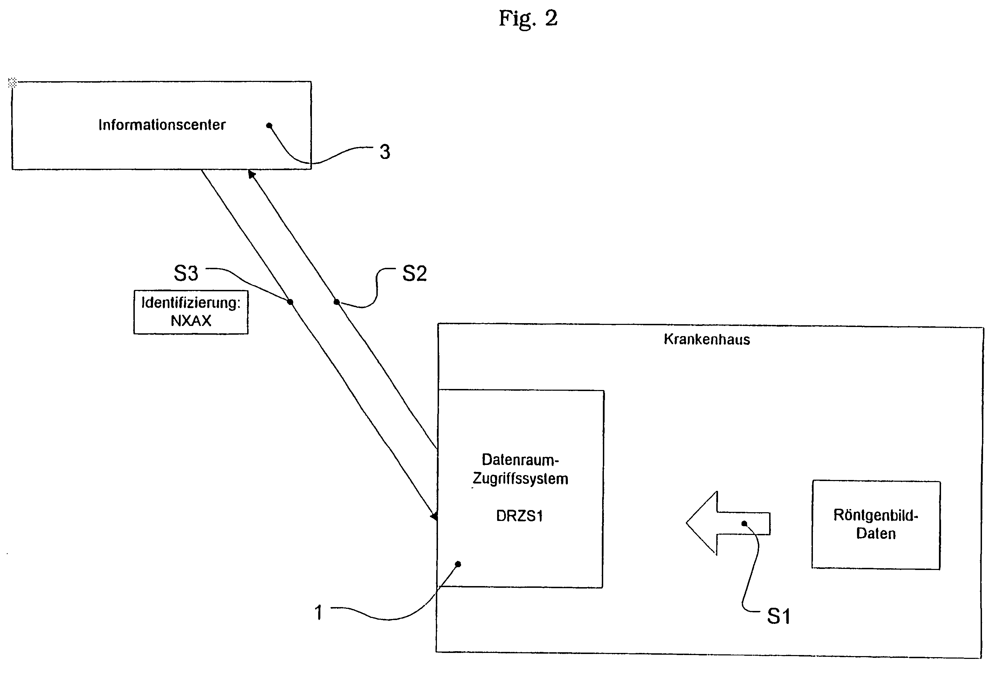

Die Figur 2 zeigt die Erzeugung von Daten eines Patienten und den Vorgang, wie diese Daten im System zur Verfügung gestellt werden.

Z. B. sucht der Patient N an einem Tag X den Arzt A auf und läßt eine neue medizinische Dateneinheit, z. B. ein Röntgenbild, erstellen. Wenn es der Patient N wünscht, kann diese Dateneinheit über das Praxisnetz anderen Ärzten zur Verfügung gestellt werden. In diesem Fall werden die zu speichernden Daten des Röntgenbildes in einem ersten Schritt S1 in einer elektronischen Form zusammen mit einem elektronischen Formular, welches den Typ der Daten enthält, in dem Datenraum-Zugriffssystem 1 mit der Kennung DRZS1 des Arztes A gespeichert. Der Typ der Daten besteht hier in der Angabe, daß es sich um ein Röntgenbild des Patienten N handelt, das der Arzt A am Tag X aufgenommen hat. Es ist auch möglich, daß der Typ der Daten lediglich aus einer dieser Angaben besteht, oder daß noch weitere Angaben hinzugefügt werden, wie z.B. die Kennung DRZS1 des die Daten speichernden Datenraum-Zugriffssystems 1. Die Daten des Röntgenbildes werden zusammen mit dem elektronischen Formular in dem gesicherten Datenspeicher des Datenraum-Zugriffssystems 1 gespeichert. Das Speichern von Daten ist nur bei einer Autorisierung des Inhabers der Rechte an diesen Daten möglich, hierzu kann z. B. die Chipkarte des Patienten dienen.

In einem zweiten Schritt S2 wird das Informationscenter 3 von dem Datenraum-Zugriffssystem 1 benachrichtigt, daß es neue Daten aufweist, nämlich ein Röntgenbild des Patienten N. Eine solche Benachrichtigung kann entweder unmittelbar nach der Speicherung der neuen Daten oder zu einem bestimmten Zeitpunkt geschehen, z. B. regelmäßig zu einer bestimmten Uhrzeit. Natürlich ist es auch möglich, daß das Informationscenter 3 zu bestimmten Zeitpunkten Anfragen an jedes Datenraum-Zugriffssystem 1, 2 schickt, ob neue Daten gespeichert wurden.

In einem dritten Schritt S3 registriert das Informationscenter 3 das Vorhandensein des Röntgenbilds des Patienten N vom Tag X mit der Verfügbarkeit im Datenraum-Zugriffssystem 1 und weist diesen Daten eine nur einfach vorhandene Identifizierung zu, z. B. NXAX. wonach diese Identifizierung mit einer benachrichtigenden Bestätigung vom Informationscenter 3 an das Datenraum-Zugriffssystem 1 übertragen wird. Im Datenraum-Zugriffssystem 1 wird die so zugewiesene Identifizierung zur Verwaltung der zugehörigen Daten verwendet, indem diese zu den Daten hinzugefügt wird. Über eine entsprechende Konfiguration kann gewährleistet werden, daß Daten nicht mehrfach im System vorhanden sind. Spätestens mit der Registrierung der Daten durch das Informationscenter 3 erfolgt hier eine Überprüfung der Autorisierung der Datenspeicherung durch den Patienten. Im Falle der Nichtautorisierung werden keinem Teilnehmer Zugriffsrechte auf diese Daten gewährt.

In der Figur 2, wie auch in den nachfolgenden Figuren bedeutet der hohle Pfeil eine Übertragung von Daten in das Systen, daß heißt die Speicherung neuer Daten in einem Datenraum-Zugriffssystem 1, 2, und die normalen Pfeile jeweils eine Kommunikation über das Netzwerk 4, wie z. B. eine Anfrage oder Benachrichtigungen. Es kann also anhand der Figur 2 erkannt werden, daß in dem beschriebenen System die medizinischen Daten nicht in das Informationscenter 3 kopiert werden, sondern nach ihrer Speicherung immer im Datenraum-Zugriffssystem 1 verbleiben. Das Informationscenter 3 hält nur die Referenzen zu diesen Daten und niemals die Daten selbst. Weiter wird in den Figuren eine Datenübertragung über das Netzwerk 4 mittels neben normalen Pfeilen dargestellten Rechtecken angezeigt, in denen die jeweils übertragenen Daten angegeben sind.

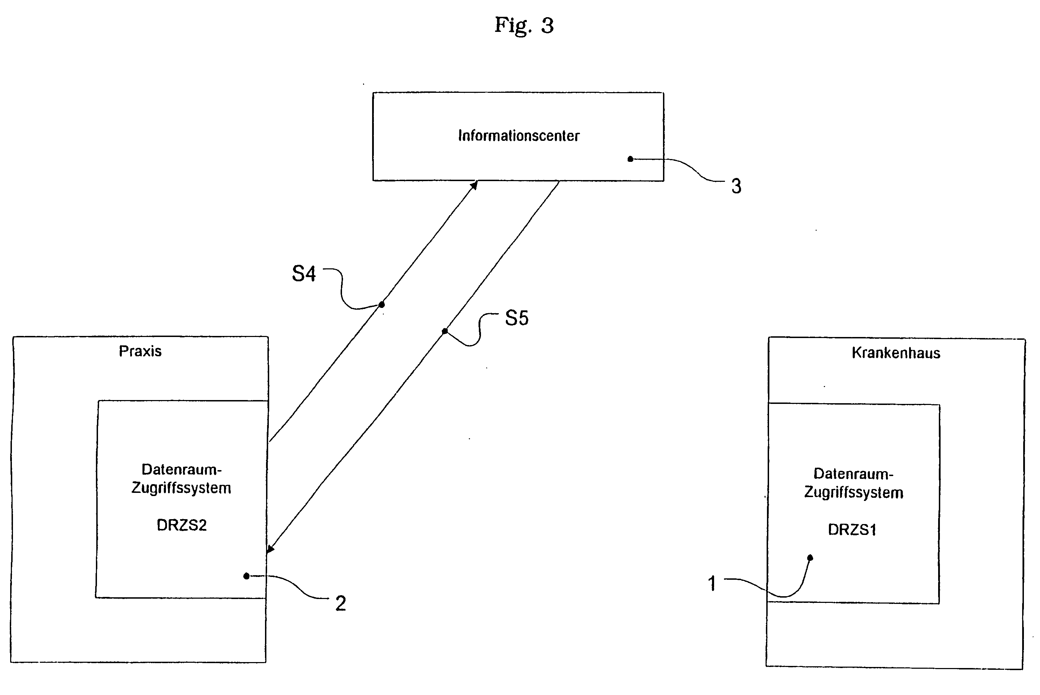

Die Figur 3 zeigt den Versuch eines Datenzugriffs über das Praxisnetz.

An einem Tag Y besucht der Patient N einen Arzt B, der ein Datenraum-Zugriffssystem 2 mit der Kennung DRZS2 besitzt. Dieser Arzt B benötigt z. B. ein aktuelles Röntgenbild des Patienten N. Deshalb schickt er in einem Schritt S4 von seinem Datenraum-Zugriffssystem 2 eine Anfrage nach Röntgenbildern des Patienten N an das Informationscenter 3. Das Informationscenter 3 erstellt eine Liste der Referenzen zu allen Röntgenbildern des Patienten N, die zur Zeit im Gesamtsystem vorhanden sind, d. h. in allen angeschlossenen Datenraum-Zugriffssystemen 1, 2 gespeichert sind und vom Informationscenter 3 registriert wurden. Anschließend überprüft das Informationscenter 3 die Zugriffsrechte an den in dieser Liste aufgeführten Daten hinsichtlich des Arztes B, von dem die Anfrage über Röntgenbilder des Patienten N kam, und überträgt in einem Schritt S5 lediglich die Referenzen der Röntgenbilder des Patienten N, auf die der Arzt B die Zugriffsrechte vom Pateienten N, der in diesem Fall der Inhaber der Rechte an seinen Daten ist, erteilt bekommen hat. Da in diesem Fall z. B. von dem Patienten N noch keine Zugriffsrechte für seine Röntgenbilder definiert wurden, ist diese Liste leer. Deshalb sendet das Informationscenter 3 eine Nachricht "Keine Daten gefunden" an das Datenraum-Zugriffssystem 2. Dieses gibt diese Nachricht an den Arzt B aus.

Demnach kann ohne Zugriffsrechte des Patienten, der der Inhaber der Rechte an den gespeicherten Daten ist, kein Arzt das Vorhandensein der Daten im System erkennen. Eine Durchbrechung dieses für bestimmte Daten, für die im einzelnen Zugriffsrechte definiert wurden, sicheren Systems ist nur möglich, wenn der Patient N z. B. allgemeine Zugriffsrechte auf seine gesamten Daten oder auf bestimmte Daten im voraus an bestimmte Ärzte gegeben hat. Auch in diesem Fall hat aber der Patient selbst bestimmt, wer auf seine Daten zugreifen kann, also wurden auch hier seine Datenschutzrechte gewahrt.

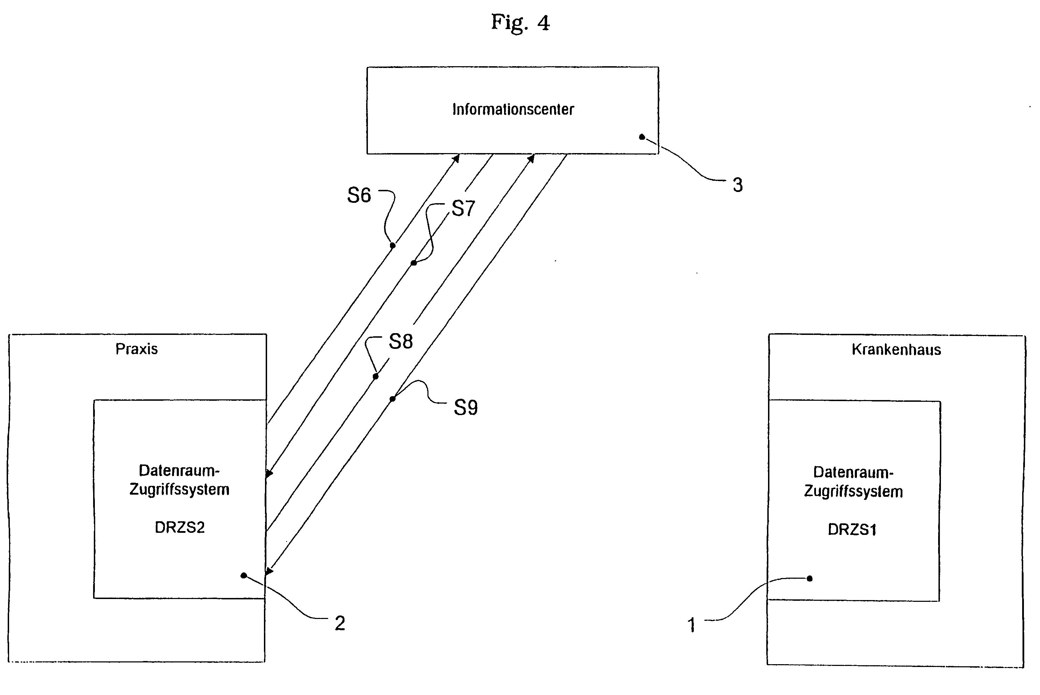

Die Figur 4 stellt die Definition von Zugriffsrechten des Patienten in dem Informationscenter 3 dar.

Der Patient N kann in einem Schritt S6 z. B. über das Datenraum-Zugriffssystem 2 eine Liste aller seiner zur Zeit im Gesamtsystem zur Verfügung stehenden Daten vom Informationscenter 3 abrufen. Alternativ kann er auch nur eine Liste von bestimmten Daten abrufen. In einem Schritt S7 verarbeitet das Informationscenter diese Anfrage und sendet die jeweils geforderte Liste an das Datenraum-Zugriffssystem 2. Der Patient N kann jetzt Zugriffsrechte an den durch die Liste aufgezeigten Daten definieren. Hat er z. B. eine Liste aller seiner Röntgenbilder angefordert, so kann er definieren, daß der Arzt B und/oder jeder andere Arzt oder eine bestimmte Gruppe von Ärzten auf das am Tag X vom Arzt A gefertigte Röntgenbild mit der Identifizierung NXAX zugreifen kann. Ein solches Zugriffsrecht kann zeitlich begrenzt oder unbegrenzt sein. Das Zugriffsrecht kann auch im voraus für andere in der Zukunft zur Verfügung stehende Daten vergeben werden. Hat der Patient N alle gewünschten Zugriffsrechte definiert, so kann er in einem Schritt S8 über das Datenraum-Zugriffssystem 2 eine Aktualisierung der Zugriffsrechte im Inforamationscenter 3 bewirken. Das Informationscenter 3 speichert in einem Schritt S9 die Änderungen und sendet eine Bestätigung zurück an das Datenraum-Zugriffssystem 2.

Diese Zugriffsrechte können alternativ auch zu dem Zeitpunkt vergeben werden, zu dem neue Daten in einem Datenraum-Zugriffssystem 1, 2 gespeichert werden. Ein Patient oder sonstiger Inhaber von Rechten an in einem Datenraum-Zugriffssystem 1, 2 gespeicherten Daten kann Zugriffsrechte von jedem beliebigen Datenraum-Zugriffssystem 1. 2 aus vergeben. Denkbar wäre es z. B., daß solche Datenraum-Zugriffssysteme 1, 2 neben ihrem Standort in Arztpraxen oder Krankenhäusern auch in Apotheken aufgestellt werden, oder daß auf ein Praxisnetz auch über das Internet zugegriffen werden kann, wodurch jeder internetfähige Computer zu einem Datenraum-Zugriffssystem oder zumindest zu einem Zugriffssystem werden könnte, welches keinen Speicherplatz zur Verfügung stellt. Der Inhaber der Rechte an in einem Datenraum-Zugriffssystem 1, 2 gespeicherten Daten, hier also der Patient, ist aufgrund seiner Autorisierung und Identifikation die einzige Person, der die Zugriffsrechte vom Informationscenter 3 angezeigt werden und/oder die sie im Informationscenter 3 modifizieren kann.

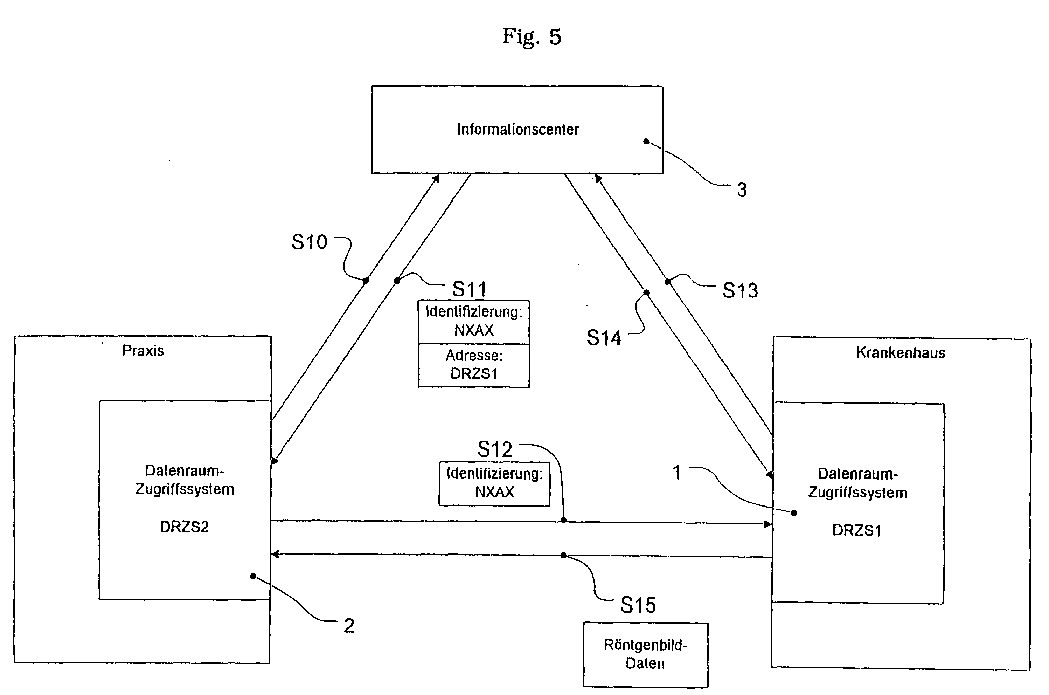

Die Figur 5 zeigt den für einen erfolgreichen Zugriff auf bestimmte Daten nötigen Ablauf.

Nach der Definition der Zugriffsrechte an den am Tag X vom Arzt A aufgenommenen Röntgenbild des Patienten N mit der Identifizierung NXAX für den Arzt B durch den Patienten N startet der Arzt B in einem Schritt S10 eine erneute Anfrage an das Informationscenter, alle Referenzen zu den Röntgenbildern des Patienten N anzugeben. In einem Schritt S 11 stellt das Informationscenter eine Liste der Referenzen aller zur Zeit in allen Datenraum-Zugriffssystemen vorhandenen Röntgenbilder des Patienten N zusammen, überprüft die Zugriffsberechtigungen hinsichtlich des anfragenden Arztes B und wählt lediglich die Röntgenbilder aus, auf die der Arzt B zugreifen darf, um die zugehörigen Referenzen an das Datenraum-Zugriffssystem 2 zu übertragen, von dem aus der Arzt B die Anfrage an das Informationscenter ausgeführt hat. In diesem Fall wird z. B. nur die Identifizierung NXAX des am Tag X vom Arzt A erstellten Röntgenbildes des Patienten N zusammen mit dem Speicherort/der Adresse, hier das Datenraum-Zugriffssystem 1 mit der Kennung DRZS1, an das Datenraum-Zugriffssystem 2 übertragen, welches dem Arzt B diese Information anzeigt. Der Arzt B kann also nur die Referenzen zu Daten sehen, auf die der Patient N dem Arzt B Zugriffsrechte gewährt hat. Die Referenzen können z. B. die Art der Daten, hier Röntgenbild, das Datum der Untersuchung, hier den Tag X, den untersuchenden Arzt, hier den Arzt A, den Speicherort der Daten, hier das Datenraum-Zugriffssystem 1 mit der Kennung DRZS1, oder auch noch weitere Daten enthalten. In einem Schritt S 12 wählt der Arzt B das Röntgenbild mit der Identifizierung NXAX aus, woraufhin das Datenraum-Zugriffssystem 2 eine Anfrage des Arztes B über das Röntgenbild mit der Identifizierung NXAX an das Datenraum-Zugriffssystem mit der Kennung DRZS1, hier das Datenraum-Zugriffssystem 1 sendet. In einem Schritt S13 sendet das Datenraum-Zugriffssystem 1 daraufhin eine Anfrage an das Informationscenter 3, um zu bestätigen, daß der Arzt B die Zugriffsrechte auf das Röntgenbild mit der Identifizierung NXAX besitzt. Das Informationscenter 3 antwortet in einem Schritt S 14 mit einer Bestätigung, woraufhin das Datenraum-Zugriffssystem 1 in einem Schritt S 15 die Daten des Röntgenbildes mit der Identifizierung NXAX an das Datenraum-Zugriffssystem 2 überträgt. Dieses stellt die empfangenen Daten des Röntgenbildes in akzeptabler Form dar und/oder läßt den Arzt B die Daten zur weiteren Verarbeitung speichern, wobei eine solche Speicherung nicht in dem sicheren Speicher des Datenraum-Zugriffssystems 2, sondern auf einem anderen Speichermedium erfolgen muß, denn sonst wären die Daten mehrfach im System vorhanden.

Hat eine berechtigte Person die empfangenen Daten einmal für die weitere Verarbeitung gespeichert, so kann sie natürlich immer wieder auf diese gespeicherten Daten zugreifen. Ein Zugriff über das Praxisnetz ist jedoch nur solange möglich, wie es der Inhaber der Rechte an diesen Daten über die Definition der Zugriffsrechte erlaubt.

Da also nach dem erfindungsgemäßen Verfahren ein Speichern von bestimmten Daten nur mit der Zustimmung des Inhabers der Rechte an diesen Daten möglich ist und auch ein Abrufen solcher Daten nur mit Zustimmung des Inhabers der Rechte an diesen Daten möglich ist, werden die Persönlichkeitsrechte z. B. eines Patienten gewahrt. Das System arbeitet für jeglichen Benutzer vollkommen transparent, wobei der einzelne Benutzer keine Kenntnisse über die Sicherheits- oder Übertragungsverfahren haben muß. Durch die Verschlüsselung der gesendeten Daten können unberechtigte Personen nicht "mithören" und durch die Definition von bestimmten Zugriffsrechten für bestimmte Daten durch den Inhaber der Rechte an ihnen können keine unberechtigten Datenzugriffe erfolgen.

Bei der Übertragung der Daten ist es von besonderem Vorteil, wenn die vom Inhaber der Zugriffsrechte festgelegte Zweckbindung der Übermittlung dieser Daten im ursprünglichen Datenkontext zusammen mit diesen Daten in Form "elektronischen Wasserzeichens" übermittelt und zusätzlich diese Daten sichtbar als zweckgebundene Kopie der Originaldaten gekennzeichnet werden.

Das erfindungsgemäße Verfahren zum abgesicherten Zugriff auf Daten in einem Netzwerk kann natürlich auch auf andere nicht-medizinische Netzwerke angewandt werden, da hier ein System zur Steuerung der Verteilung individueller Daten vorgeschlagen ist. Ein anderer Anwendungsbereich ist z. B. die Verteilung von Personendaten zu ihrer Identifikation, wodurch die Übertragung dieser Daten z. B. zwischen unterschiedlichen Verwaltungsbehörden ohne eine zentralisierte Datenbank der einzelnen Bürger flexibler gestaltet werden kann. Durch das erfindungsgemäße System hat nur der betroffene Bürger selbst und allein die Verfügungsgewalt über seine individuellen Daten.

## Patentansprüche

1. Verfahren zum abgesicherten Zugriff auf Daten in einem Netzwerk mit einem Informationscenter (3) und mehreren Datenraum-Zugriffssystemen (1. 2), bei dem allein ein Inhaber von Rechten an zu speichernden Daten das Speichern dieser Daten erlauben und die Zugriffsrechte Dritter auf diese Daten in dem Informationscenter (3) definieren kann, wobei:
- die Datenraum-Zugriffssysteme (1, 2) dem Inhaber der Rechte nicht zugänglich sind.
- die einmal gespeicherten Daten an ihrem Speicherplatz verbleiben und nicht zentralisiert gesammelt werden.
- das Informationscenter (3) das Vorhandensein von Daten eines bestimmten Typs in jedem Datenraum-Zugriffssystem (1) registriert, wonach der Inhaber der Rechte an den gespeicherten Daten in dem Informationscenter (3) Zugriffsrechte Dritter auf die Daten zu definieren vermag,
- das Informationscenter (3) nach einer Anfrage eines anfragenden Datenraum-Zugriffssystems (2) nach Daten eines bestimmten Typs eine Liste der vorhandenen Daten dieses bestimmten Typs, für die die Zugriffsrechte des anfragenden Datenraum-Zugriffssystem (2) zu den im Informationscenter (3) für diese Daten definierten Zugriffsrechten korrespondieren, unter Angabe des diese Daten jeweils speichernden Datenraum-Zugriffssystems (1) erstellt und diese Liste an das anfragende Datenraum-Zugriffssystem (2) überträgt, und
- die Daten des bestimmten Typs von dem diese Daten speichernden Datenraum-Zugriffssystem (1) direkt nur an das anfragende Datenraum-Zugriffssystem (2) übertragen werden, wenn das diese Daten speichernde Datenraum-Zugriffssystem (1) von dem Informationscenter (3) eine Bestätigung erhalten hat.

2. Verfahren nach Anspruch 1, **dadurch gekennzeichnet, daß** eine Autorisierung der Speicherung von Daten und der Definition der Zugriffsrechte Dritter an den Daten über eine Identitätsprüfung des Inhabers der Rechte an den Daten erfolgt.

3. Verfahren nach Anspruch 1 oder 2, **dadurch gekennzeichnet, daß** zu speichernde Daten zusammen mit einem elektronischen Formular, welches den Typ der Daten enthält, in dem Datenraum-Zugriffssystem (1) gespeichert werden.

4. Verfahren nach einem der Ansprüche 1 bis 3, **dadurch gekennzeichnet, daß** von einem Daten speichernden Datenraum-Zugriffssystem (1) bei einer Anfrage nach bestimmten Daten eines bestimmten Typs eines anfragenden Datenraum-Zugriffssystems (2) eine Überprüfung der Zugriffsrechte durch eine Anfrage an das Informationscenter (3) erfolgt, ob das anfragende Datenraum-Zugriffssystem auf die bestimmten Daten eines bestimmten Typs Zugriffsrechte hat.

5. Verfahren nach einem der Ansprüche 1 bis 4, **dadurch gekennzeichnet, daß** ein bestimmte Daten eines bestimmten Typs empfangendes Datenraum-Zugriffssystem (2) nur direkt nach einem jeweiligen Datenempfang einen Zugriff auf die empfangenen Daten erlaubt.

6. Verfahren nach einem der Ansprüche 1 bis 5. **dadurch gekennzeichnet, daß** von einem bestimmte Daten eines bestimmten Typs selbst speichernden Datenraum-Zugriffssystem (1) ein Zugriff auf die bestimmten Daten eines bestimmten Typs nur gewährt wird, wenn eine positive Überprüfung der Zugriffsrechte durch eine Anfrage an das Informationscenter (3) erfolgt ist, ob das die bestimmten Daten eines bestimmten Typs selbst speichernde Datenraum-Zugriffssystem (1) für die bestimmten Daten eines bestimmten Typs Zugriffsrechte vorweisen kann.

7. Verfahren nach einem der Ansprüche 1 bis 6, **dadurch gekennzeichnet, daß** das Informationscenter (3) von einem neue Daten aufweisenden Datenraum-Zugriffssystem (1) über das Vorhandensein neuer Daten eines bestimmten Typs benachrichtigt wird, woraufhin das Informationscenter (3) eine benachrichtigenden Bestätigung an das betreffende Datenraum-Zugriffssystem (1) sendet.

8. Verfahren nach einem der Ansprüche 1 bis 7, **dadurch gekennzeichnet, daß** die Daten anhand einer vom Informationscenter (3) zugewiesene nur einfach vorhandenen Identifizierung identifiziert werden, die von dem Informationscenter (3) nach einer Registrierung von neuen Daten an das diese Daten speichernde Datenraum-Zugriffssystem (1) übertragen wird, damit dieses die jeweilige Identifizierung an die jeweiligen Daten anhängt.

9. Verfahren nach einem der Ansprüche 1 bis 8, **dadurch gekennzeichnet, daß** das Informationscenter (3) nach einer Anfrage über Daten eines bestimmten Typs von einem Datenraum-Zufgriffssystem (2) eine Liste aller vorhandenen Daten dieses bestimmten Typs erstellt, bevor es die Zugriffsrechte auf die Daten des bestimmten Typs überprüft, um die Liste der vorhandenen Daten dieses bestimmten Typs unter Angabe des diese Daten jeweils speichernden Datenraum-Zugriffssystems (1) an das anfragende Datenraum-Zugriffssystem (2) zu übertragen, für die das anfragende Datenraum-Zugriffssystem (2) die Zugriffsrechte vorweisen kann.

10. Verfahren nach einem der Ansprüche 1 bis 9, **dadurch gekennzeichnet, daß** bei einem gewünschten Datenzugriff von einem Datenraum-Zugriffssystem (1) auf Daten eines bestimmten Typs zunächst eine Anfrage nach solchen Daten des bestimmten Typs an das Informationscenter (3) geschickt wird.

11. Verfahren nach einem der Ansprüche 1 bis 10, **dadurch gekennzeichnet, daß** bei einer gewünschten Datenübertragung von einem Daten speichernden Datenraum-Zugriffssysten (1) an ein anfragendes Datenraum-Zugriffssystem (2) von diesem zunächst eine Anfrage nach bestimmten Daten eines bestimmten Typs an das diese bestimmten Daten eines bestimmten Typs speichernde Datenraum-Zugriffssystem (1) geschickt wird.

12. Verfahren nach einem der Ansprüche 1 bis 11, **dadurch gekennzeichnet, daß** die Daten in einem Datenraum-Zugriffssystem (1, 2) in einem sicheren Datenspeicher gespeichert werden, wobei auf die darin gespeicherten Daten kein direkter Zugriff möglich ist.

13. Verfahren nach einem der Ansprüche 1 bis 12. **dadurch gekennzeichnet, daß** der Typ der Daten durch ihren Inhalt und/oder den Inhaber der Rechte an den Daten bestimmt wird.

14. Verfahren nach einem der Ansprüche 1 bis 13, **dadurch gekennzeichnet, daß** die Zugriffsrechte an gespeicherten Daten durch den Inhaber der Rechte an den Daten zu einem beliebigen Zeitpunkt nach ihrer Registrierung in dem Informationscenter (3) definiert werden können und danach durch eine Neudefinition von dem Inhaber der Rechte an den Daten beliebig wieder geändert werden können.

15. Verfahren nach einem der Ansprüche 1 bis 14, **dadurch gekennzeichnet, daß** die Zugriffsrechte an gespeicherten Daten durch den Inhaber der Rechte an den Daten mit ihrer Speicherung in einem Datenraum-Zugriffssystem (1, 2) vergeben werden können.

16. Verfahren nach einem der Ansprüche 1 bis 15, **dadurch gekennzeichnet, daß** die Kommunikation zwischen einem Datenraum-Zugriffssystem (1, 2) und dem Informationscenter (3) oder einem anderen Datenraum-Zugriffssystem (2, 1) verschlüsselt erfolgt.

17. Verfahren nach Anspruch 16, **dadurch gekennzeichnet, daß** der Sender die von ihm gesendete Information mittels einem geheimen Signaturschlüssels mit einer digitalen Signatur versieht, wodurch der Empfänger die gesendete Information mittels eines dazugehörenden öffentlichen Signaturschlüssels überprüfen kann.

18. Verfahren nach Anspruch 16 oder 17, **dadurch gekennzeichnet, daß** der Sender alle übertragenen Daten mittels eines vom Empfänger ausgegebenen öffentlichen Verschlüsselungsschlüssel kodiert, wodurch nur der Empfänger die übertragenen Daten mittels eines geheimen Verschlüsselungsschlüssels dekodieren kann.

19. Verfahren nach einem der Ansprüche 16 bis 18, d**adurch gekennzeichnet, daß** sowohl jedes Datenraum-Zugriffssystem (1, 2) und das Informationscenter (3) als auch jeder Teilnehmer je einen geheimen und je einen öffentlichen Signaturschlüssel und Verschlüsselungsschlüssel aufweisen.

20. Verfahren nach Anspruch 19, **dadurch gekennzeichnet, daß** die geheimen Signaturschlüssel und Verschlüsselungsschlüssel und/oder öffentlichen Signaturschlüssel und Verschlüsselungsschlüssel eines Teilnehmers auf einem Datenträger, wie z. B. einer Chipkarte, gespeichert sind.

21. Verfahren nach einem der Ansprüche 1 bis 20 **dadurch gekennzeichnet, daß** sich ein auf das Netzwerk zugreifender Teilnehmer autorisieren muß und seine Identität vom Informationscenter überprüft wird.

22. Verfahren nach Anspruch 21, **dadurch gekennzeichnet, daß** die Identität eines Teilnehmers auf einem Datenträger, wie z. B. einer Chipkarte, gespeichert ist.

23. Verfahren nach einem der Ansprüche 1 bis 22, **dadurch gekennzeichnet, daß** die Erlaubnis der Speicherung der Daten durch den Inhaber der Rechte an den Daten spätestens bei einer Registrierung der Daten in dem Informationscenter (3) erfolgt, wobei das Informationscenter (3) ohne korrekte Autorisierung keinen späteren Datenzugriff auf diese Daten erlaubt.

24. Verfahren nach mindestens einem der vorstehenden Ansprüche, **dadurch gekennzeichnet, daß** bei der Übertragung der Daten die vom Inhaber der Zugriffsrechte festgelegte Zweckbindung der Übermittlung dieser Daten im ursprünglichen Datenkontext zusammen mit diesen Daten in Form eines elektronischen Wasserzeichens übermittlelt und darüber hinaus die Daten sichtbar als zweckgebundene Kopie der Originaldaten **gekennzeichnet** werden.

## Claims

1. A method for secured access to data in a network including an information centre (3) and a plurality of data area access systems (1,2) in which permission to store and define access rights of third parties to data at the information centre (3) are limited to the owner of rights to said data to be stored, wherein:
- the data area access system (1,2) are not accessible to the owner of the rights.
- the data are stored only once and remain at their storage place and may not centrally gathered.
- registering the presence of data of a certain type in each data area access system (1) at said information centre (3), should he wish, defining access rights of third parties to said data at said information centre (3);
- transmitting a list of the data present of a certain type, specifying the data area access system (1) storing said data, from said information centre (3) to a requesting data area access system (2) for which the access rights of said requesting data area access system (2) correspond to the access rights defined at said information centre (3) for said data, and after a request of a requesting data area access system (2) for data of a certain type; and then
- directly transmitting said data of said certain type by said data area access system (1) storing said data to said requesting data area access system (2) subject to said data area access system (1) storing said data having received a confirmation from said information centre (3).

2. A method as defined in Claim 1, wherein an authorisation of the storage of data and of the definition of the access rights of third parties to the data takes place by means of an identity check of the owner of the rights to the data.

3. A method as defined in Claim 1 or 2, wherein data to be stored are stored in said data area access system (1) with an electronic form which contains the type of the data.

4. A method as defined in one the Claims 1 to 3, wherein a data area access system (1) storing data responds to a request for certain data of a certain type by a requesting data area access system (2) by verifying the access rights through an inquiry to the information centre (3) as to whether the requesting data area access system (2) has access rights to the certain data of a certain type.

5. A method as defined in one the Claims 1 to 4, wherein a data area access system (2) receiving certain data of a certain type allows access to the received data only directly after a respective reception of said data.

6. A method as defined in one the Claims 1 to 5, wherein a data area access system (1) storing certain data of a certain type grants access to the certain data of a certain type only if a positive verification has taken place through an inquiry to the information centre (3) as to whether said data area access system (1) storing said certain data of a certain type can show access rights for said data of a certain type.

7. A method as defined in one the Claims 1 to 6, wherein the information centre (3) is notified by a data area access system (1) having new data about the presence of new data of a certain type, whereupon said information centre (3) sends a notifying confirmation to the data area access system (1).

8. A method as defined in one the Claims 1 to 7, wherein said data are identified on the basis of an identification which is allocated as a unique identification by said information centre (3) and is transmitted by said information centre (3) after registration of a new data to the data area access system (1) storing said data, in order for said system to append the respective identification to the respective data.

9. A method as defined in one the Claims 1 to 8, wherein after an inquiry for data of a certain type by a data area access system (2), said information centre (3) prepares a list of all the data present of this certain type before it verifies the access rights to the data of the certain type, in order to transmit the list of data present of this certain type, specifying the data area access system (1) respectively storing these data, to the requesting data area access system (2) for which the requesting data area access system (2) can show said access rights.

10. A method as defined in one the Claims 1 to 9, wherein when data access is desired by a data area access system (2) to data of a certain type, firstly a request for such data of the certain type is sent to the information centre (3).

11. A method as defined in one the Claims 1 to 10, wherein when data transmission is desired from a data area access system (1) storing data to a requesting data area access system (2), firstly a request for certain data of a certain type is sent by the latter system to the data area access system (1) storing these certain data of a certain type.

12. A method as defined in one the Claims 1 to 11, wherein the data in a data area access system (1) are stored in a secure memory, no direct access being possible to the data stored therein.

13. A method as defined in one the Claims 1 to 12, wherein the type of the data is determined by their content and/or the owner of the rights to the data.

14. A method as defined in one the Claims 1 to 13, wherein the access rights to stored data can be defined by the owner of the rights to the data at any point in time after their registration at the information centre (3) and, after that, can be changed again as desired by re-definition by the owner of the rights to the data.

15. A method as defined in one the Claims 1 to 14, wherein the access rights to stored data can be granted by the owner of the rights to the data when they are stored in a data area access system (1).

16. A method as defined in one the Claims 1 to 15, wherein communication between a data area access system (1,2) and the information centre (3) or another data area access system (1,2) takes place in encrypted form.

17. A method as defined in Claim 16, wherein the sender provides the information sent by him with a digital signature by means of a secret signature code, whereby the recipient can verify the sent information by means of an associated public signature code.

18. A method as defined in Claims 16 or 17, wherein the sender encodes all transmitted data by means of a public encryption code issued by the recipient, whereby only the recipient can decode the transmitted data by means of a secret encryption code.

19. A method as defined in one the Claims 16 to 18, wherein not only each data area access system (1,2) and the information centre (3) but also each participant has a secret signature code and a secret encryption code and a public signature code and a public encryption code.

20. A method as defined in Claim 19, wherein the secret signature codes and encryption codes and/or public signature codes and encryption codes of a participant are stored on a data carrier, such as a smart card.

21. A method as defined in one the Claims 1 to 20, wherein a participant accessing the network must authorise himself and his identity is verified by the information centre (3).

22. A method as defined in Claim 21, wherein the identity of a participant is stored on a data carrier such as a smart card.

23. A method as defined in one the Claims 1 to 22, wherein the permission for storing the data is given by the owner of the rights to the data at the latest when the data are registered at the information centre (3), said information centre (3) not allowing any subsequent data access to these data without correct authorisation.

24. A method as defined in at least one of the preceding Claims, wherein when the data are transmitted, the appropriation specified by the owner of the access rights for the transmission of these data in the original data context is transmitted together with these data in the form of an electronic watermark and these data are additionally marked visibly as an appropriated copy of the original data.

## Revendications

1. Un procédé d'accès sécurisé à des données dans un réseau comprenant un centre d'information (3) et une pluralité de systèmes d'accès à des aires de données (1,2), dans lequel seul le propriétaire des droits d'accès à ces données à stocker peut autoriser le stockage de ces données et définir, au niveau du centre d'information (3), les droits de tiers pour l'accès à ces données, et dans lequel :
- le propriétaire des droits d'accès aux données n'a pas accès aux systèmes d'accès à des aires de données (1,2),
- les données stockées une seule fois demeurent à leur site d'enregistrement et ne sont pas rassemblées centralement,
- le centre d'information (3) enregistre la présence de données d'un certain type dans chaque système d'accès à des aires de données (1), après quoi le propriétaire des droits d'accès aux données stockées peut définir, au niveau du centre d'information (3) les droits de tiers pour l'accès à ces données,
- après qu'un système d'accès à des aires de données (2) ait fait une demande pour des données d'un certain type, le centre d'information (3) crée une liste des données existantes de ce même type pour lesquelles les droits d'accès définis au niveau du centre d'information (3) correspondent au système d'accès à des aires de données (2) demandeur, et transmet cette liste au système d'accès à des aires de données (2) demandeur, et
- les données d'un certain type ne sont transmises directement par le système d'accès à des aires de données (1) ayant stocké ces données au système d'accès à des aires de données (2) demandeur que après que le système d'accès à des aires de données (1) ayant stocké ces données n'ait reçu une confirmation du centre d'information (3).

2. Procédé selon la revendication 1, **caractérisé en ce que** l'autorisation de stockage des données et la définition des droits de tiers pour l'accès à ces données sont réalisées grâce à une vérification d'identité du propriétaire des droits d'accès à ces données.

3. Procédé selon la revendication 1 ou 2, **caractérisé en ce que** les données à stocker sont stockées dans le système d'accès à des aires de données (1) conjointement avec un formulaire électronique qui contient la définition du type de donnée stockée.

4. Procédé selon l'une quelconque des revendications 1 à 3, **caractérisé en ce que** le système d'accès à des aires de données (1) ayant stocké une donnée, après avoir reçu une demande pour une certaine donnée d'un certain type par un système d'accès à des aires de données (2) demandeur, effectue un contrôle des droits d'accès en demandant au centre d'information (3) si le système d'accès à des aires de données (2) demandeur possède un droit d'accès à une certaine donnée d'un certain type.

5. Procédé selon l'une quelconque des revendications 1 à 4, **caractérisé en ce que** un système d'accès à des aires de données (2) recevant une certaine donnée d'un certain type n'autorise l'accès à la donnée reçue que immédiatement après avoir reçu cette donnée.

6. Procédé selon l'une quelconque des revendications 1 à 5, **caractérisé en ce que** un système d'accès à des aires de données (1) stockant lui-même une certaine donnée d'un certain type ne permet l'accès à une certaine donnée d'un certain type que après qu'une vérification positive ait été effectuée grâce à une demande au centre d'information (3) pour savoir si le système d'accès à des aires de données (1) stockant lui-même une certaine donnée d'un certain type peut montrer qu'il existe des droits d'accès définis pour cette même donnée.

7. Procédé selon l'une quelconque des revendications 1 à 6, **caractérisé en ce que** le centre d'information (3) est informé par un système d'accès à des aires de données (1) possédant une nouvelle donnée de la présence d'une nouvelle donnée d'un certain type, à la suite de quoi le centre d'information (3) envoie une annonce de confirmation au dit système d'accès à des aires de données (1).

8. Procédé selon l'une quelconque des revendications 1 à 7, **caractérisé en ce que** les dites données sont identifiées sur la base d'une identification qui est attribuée sous la forme d'une identification unique par le dit centre d'information (3) et est transmise par le dit centre d'information (3) après enregistrement d'une donnée nouvelle au système d'accès à des aires de données (1) stockant cette même donnée, afin que le dit système d'accès à des aires de données (1) joigne l'identification respective à la donnée correspondante.

9. Procédé selon l'une quelconque des revendications 1 à 8, **caractérisé en ce que** après une demande pour une donnée d'un certain type par un système d'accès à des aires de données (2), le dit centre d'information (3) prépare une liste de toutes les données présentes de ce certain type avant de vérifier les droits d'accès aux données de ce certain type, afin de transmettre la liste des données de ce certain type, avec indication du système d'accès à des aires de données (1) dans lequel ces données de ce certain type sont stockées, au système d'accès à des aires de données (2) demandeur, pour lesquelles le système d'accès à des aires de données (2) demandeur peut montrer des droits d'accès.

10. Procédé selon l'une quelconque des revendications 1 à 9, **caractérisé en ce que** lorsque l'accès à une donnée est désirée par un système d'accès à des aires de données (1) pour une donnée d'un certain type, tout d'abord une demande pour une telle donnée de ce certain type est envoyée au centre d'information (3).

11. Procédé selon l'une quelconque des revendications 1 à 10, **caractérisé en ce que** lorsque une transmission de donnée est désirée depuis un système d'accès à des aires de données (1) stockant des données à un système d'accès à des aires de données (2) demandeur, tout d'abord une demande pour une certaine donnée d'un certain type est envoyée par le système d'accès à des aires de données (2) demandeur au système d'accès à des aires de données (1) stockant ces certaines données d'un certain type.

12. Procédé selon l'une quelconque des revendications 1 à 11, **caractérisé en ce que** les données dans un système d'accès à des aires de données (1,2) sont stockées dans une mémoire sûre, au sein de laquelle un accès direct aux données n'est pas possible.

13. Procédé selon l'une quelconque des revendications 1 à 12, **caractérisé en ce que** le type des données est déterminé par leur contenu et/ou par le propriétaire des droits d'accès à la donnée.

14. Procédé selon l'une quelconque des revendications 1 à 13, **caractérisé en ce que** les droits d'accès aux données stockées peuvent être définis par le propriétaire des droits d'accès aux données n'importe quand après leur enregistrement au centre d'information (3) et peuvent être ensuite de nouveau changés à volonté grâce à une nouvelle définition des droits aux données par le propriétaire.

15. Procédé selon l'une quelconque des revendications 1 à 14, **caractérisé en ce que** les droits d'accès aux données stockées peuvent être attribués par le propriétaire des droits d'accès aux données lors de leur stockage dans un système d'accès à des aires de données (1,2).

16. Procédé selon l'une quelconque des revendications 1 à 15, **caractérisé en ce que** la communication entre un système d'accès à des aires de données (1,2) et le centre d'information (3) ou bien un autre système d'accès à des aires de données (1,2) ont lieu sous forme chiffrée.

17. Procédé selon la revendication 16, **caractérisé en ce qu'**un envoyeur munit l'information qu'il envoie d'une signature numérique au moyen d'une clé de chiffrement privée, et dans lequel le destinataire peut vérifier l'information envoyée au moyen d'une clé de chiffrement publique.

18. Procédé selon la revendication 16 ou 17, **caractérisé en ce que** l'envoyeur chiffre toute l'information envoyée au moyen d'une clé de chiffrement publique délivrée par le destinataire, et dans lequel seul le destinataire peut déchiffrer les données transmises au moyen d'une clé de chiffrement privée.

19. Procédé selon l'une quelconque des revendications 16 à 18, **caractérisé en ce que** chaque système d'accès à des aires de données (1,2) et le centre d'information (3), mais aussi chaque participant possèdent une clé de chiffrement privée et une clé de chiffrement publique ainsi qu'une signature numérique privée et une signature numérique publique.

20. Procédé selon la revendication 19, **caractérisé en ce que** la signature numérique privée et la clé de chiffrement privée et/ou bien la signature numérique publique et la clé de chiffrement publique d'un participant sont stockées sur un transporteur de données, comme une carte à puce par exemple.

21. Procédé selon l'une quelconque des revendications 1 à 20, **caractérisé en ce qu'**un participant ayant accès au réseau doit s'autoriser et que son identité sera contrôlée par le centre d'information (3).

22. Procédé selon la revendication 21, **caractérisé en ce que** l'identité d'un participant est enregistrée sur un transporteur de donnée comme par exemple une carte à puce.

23. Procédé selon l'une quelconque des revendications 1 à 22, **caractérisé en ce que** l'autorisation de stockage des données est donnée par le propriétaire des droits des données au plus tard lors de l'enresgistrement des données dans le centre d'information (3), le centre d'information (3) ne permettant pas d'accès futur aux données sans une autorisation correcte.

24. Procédé selon au moins une des revendications précédentes, **caractérisé en ce que** lorsque une donnée est transmise, l'affectation de la donnée telle qu'elle est définie par le propriétaire des droits d'accès à cette donnée dans son contexte original est transmise en même temps que cette donnée sous la forme d'un filigrane électronique, et par ailleurs la donnée est marquée d'une manière visible comme étant une copie de l'original dont l'utilisation est bien définie.
